# EUROPEAN PATENT SPECIFICATION

(11) **EP 0 198 692 B1**
(45) Date of publication and mention of the grant of the patent: **03.03.1993**
(21) Application number: 86302721.5
(22) Date of filing: 11.04.1986
(51) Int. Cl.: H04N 17/02

(54) **Television monitor control apparatus**
Kontrolleinrichtung für einen Fernsehmonitor
Appareil de contrôle pour moniteur de télévision

(30) Priority: 12.04.1985 JP 77956/85; 12.04.1985 JP 77957/85
(43) Date of publication of application: 22.10.1986
(73) Proprietor: SONY CORPORATION, Tokyo 141 (JP)
(72) Inventor: Kumagai, Toru, Shinagawa-ku Tokyo 141 (JP); Kosugi, Yoshihiro, Shinagawa-ku Tokyo 141 (JP)
(74) Representative: Thomas, Christopher Hugo

(56) References cited:
- EP-A- 0 003 576
- US-A- 3 573 352
- US-A- 3 962 722
- US-A- 4 207 589
- US-A- 4 700 218

## Description

This invention relates to television monitor control apparatus and, more particularly, but not exclusively, is directed to a television monitor control apparatus suitable for use with a master monitor of, for example, a television broadcast station.

Generally, in a television monitor control apparatus used in a television broadcast station, it is necessary that colour gain and colour hue be adjusted with high accuracy. Hitherto, when the colour gain and the colour hue are adjusted, they are adjusted manually by the skilled engineer while visually checking the display on the picture screen of a colour bar signal. Moreover, white balance is controlled manually by a skilled engineer with reference to a subjective visual standard or by using a colour analyzer. In either case, the adjustment procedure is cumbersome, and usually it takes at least ten minutes to adjust the white balance of a single television monitor.

US patent specification U5-A-4 207 589 discloses a form of hue adjustment apparatus corresponding to the pre-characterizing part of claim 1.

According to the present invention there is provided television monitor control apparatus comprising:
colour bar generating means for generating a predetermined colour bar signal of a standard television signal format;
signal processing means supplied with said colour bar signal from said colour bar generating means;
a colour cathode ray tube supplied with a processed colour signal obtained from said signal processing means; and
signal control means for adjusting the operation of said signal processing means;
characterized in that:
said signal control means includes level detecting and comparing means, means operating said level detecting and comparing means to compare the level of a blue colour portion of said colour bar signal as processed by said signal processing means with the level of the blue component of a white portion of the processed colour bar signal, means for adjusting the gain of said signal processing means in response to an output of said level detecting and comparing means so as to achieve coincidence of the levels of the compared blue portion and blue component of the white portion of said processed colour bar signal, means cooperating with said level detecting and comparing means to compare the level of said blue component of the white portion of the processed colour bar signal with the level of the blue component of a cyan or magenta portion of the processed colour bar signal, and means for adjusting said signal processing means in response to an output of said level detecting and comparing means so as to achieve coincidence of the levels of the compared blue components of the white portion and the cyan or magenta portion of the processed colour bar signal.

The invention will now be described with reference to the accompanying drawings, throughout which like parts are referred to by like references, and in which:
Figure 1 is a block diagram showing an embodiment of television monitor control apparatus according to the invention;
Figure 2 is a block diagram showing one example of a circuit arrangement of a colour signal processing circuit included in the embodiment of Figure 1;
Figure 3 is a general flow chart showing a program by which colour gain and colour hue are controlled in the embodiment of Figure 1;
Figures 4, 5, 6 and 7 are respectively flow charts showing subroutines of the program in Figure 3;
Figure 8 (formed of Figures 8I, 8II and 8III) is a detailed flow chart of an operation program for automatically adjusting the white balance in the program of Figure 3; and
Figure 9 is a schematic representation of a level of a blue colour component of a colour bar signal.

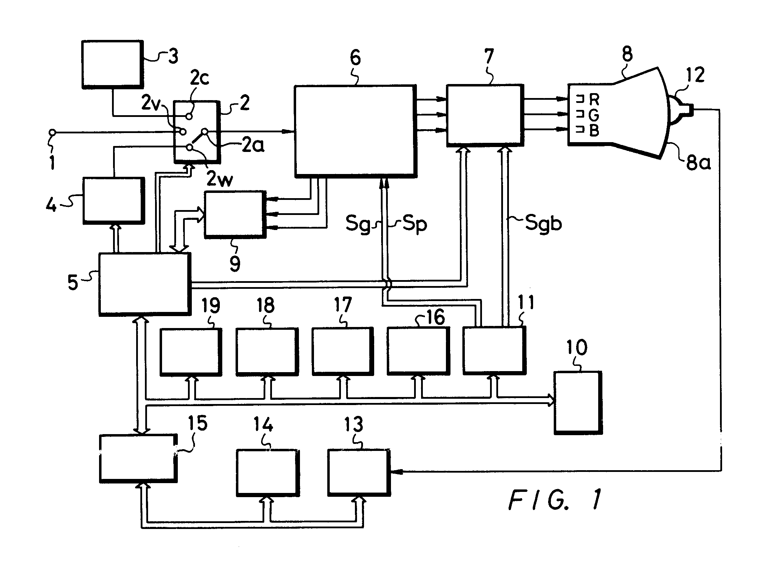

An embodiment of a television monitor control apparatus according to the present invention will now be described in detail with reference to Figure 1, in which a video signal to be monitored is supplied from a video signal input terminal 1 to a first fixed contact 2v of a switch 2. A colour bar signal generator 3 is provided to generate, for example, an SMPTE colour bar signal which is supplied to a second fixed contact 2c of the switch 2. A white signal generating circuit 4 is controlled by a control signal from an I/O interface 5, which will be further described later, such that the white signal generating circuit 4 selectively generates a high white signal, for example, of the level 100 IRE, and a low white signal, for example, of a level ranging from 10 to 20 IRE. Such selected output signal from the white signal generating circuit 4 is supplied to a third fixed contact 2w of the switch 2. A movable contact 2a of the switch 2 is selectively engaged with the first, second and third fixed contacts 2v, 2c and 2w in response to a suitable control signal from the I/O interface 5.

The selected signal appearing at the movable contact 2a of the switch 2 is supplied through a colour signal processing circuit 6 to a drive circuit 7, and red, green and blue signals appearing at respective outputs of the drive circuit 7 are supplied to red, green and blue cathodes respectively, of a colour cathode ray tube 8.

In the embodiment, the colour bar signal from the colour signal processing circuit 6 is supplied to a level detecting/comparing circuit 9. In the level detecting/comparing circuit 9, the level of only the blue colour component of the colour bar signal is detected. More specifically, when the colour gain is being adjusted, a central processing unit (CPU) 10 is operated via the I/O interface 5 in such a manner that the level of the blue colour component of the white portion W of the colour bar signal (Figure 9) coincides with the signal level of the blue colour portion B, and the gain of the colour signal processing circuit 6 is adjusted by a control signal Sg from a digital-to-analogue (D/A) converting circuit 11. When the colour hue is being adjusted, the CPU 10 is operated via the I/O interface 5 in such a manner that the level of the blue colour component of the white portion W coincides with the level of the blue colour component of the magenta portion M or the cyan portion CY of the colour bar signal (Figure 9) and the colour hue is adjusted by a control signal Sp from the D/A converting circuit 11. Upon adjusting the white balance, the drive circuit 7 switchably selects and supplies a single colour signal of the red, green and blue colour signals to the colour cathode ray tube 8 in response to a control signal from the I/O interface 5.

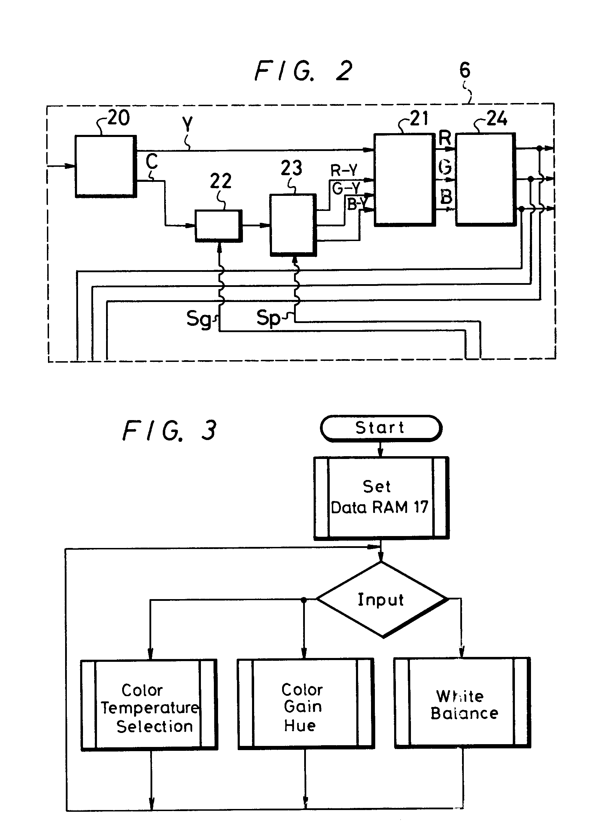

The colour signal processing circuit 6 will now be described more fully with reference to Figure 2, in which the output from the switch 2 is shown supplied to a luminance/chrominance (Y/C) separator 20 and thereby separated into a luminance signal Y and a chrominance signal C. The luminance signal Y from the Y/C separator 20 is supplied to a matrix circuit 21, while the chrominance signal C is supplied through a gain control amplifier 22 to a decoder 23. The decoder 23 generates three colour difference signals R-Y, G-Y and B-Y which are all supplied to the matrix circuit 21 along with the luminance signal Y. Three primary colour signals R, G and B appearing at the output side of the matrix circuit 21 are all supplied through a brightness and contrast adjusting circuit 24 to the drive circuit 7. The outputs from the brightness and contrast adjusting circuit 24 are also supplied to the level detecting/comparing circuit 9 as the previously mentioned colour bar signal. The gain control signal Sg and the detecting phase or hue control signal Sp are supplied to the gain control amplifier 22 and the decoder 23, respectively, from the D/A converting circuit 11.

Turning back to Figure 1, it will be seen that a brightness detecting apparatus 12 is detachably mounted on a video display screen 8a of the colour cathode ray tube 8. The brightness detecting apparatus 12 is constituted by, for example, a phototransistor. A brightness detecting signal appearing at the output of the brightness detecting apparatus 12 is supplied to a comparing circuit 13. In this case, in the comparing circuit 13, the brightness detecting signal from the brightness detecting apparatus 12 is converted to a digital signal and then this digital signal is compared with a suitable reference signal, as will be specifically described later. An electrically erasable programmable read only memory (EEPROM) is employed as a memory 14. In the EEPROM 14 there is stored a plurality (for example, three sets) of six reference signals constituting red, green and blue high and low reference signals, and from which it is possible to select a desirable white colour. The EEPROM 14, the comparing circuit 13 and an I/O interface 15 are connected by a bus line through which a reference signal selected from the EEPROM 14 is supplied to the comparing circuit 13 and the I/O interface 15.

The CPU 10, the D/A converting circuit 11, a work random access memory (RAM) 16, a data RAM 17, an EEPROM 18, a read only memory (ROM) 19 and the I/O interface 15 are connected by a bus line through which a signal can be transferred from one to another of these elements. In the EEPROM 18, there are stored a plurality (for example, three kinds) of colour temperature reference signals from which a desirable colour temperature can be selected. Also, data corresponding to an earlier adjustment are stored in the EEPROM 18. The colour gain and colour hue of the gain control amplifier 22 (Figure 2) and the decoder 23 (Figure 2), respectively, can be adjusted by the output signals Sg and Sp from the D/A converting circuit 11, and also the gain and bias of the drive circuit 7 can be adjusted by an output signal Sgb from the D/A converting circuit 11.

The above-described television monitor control apparatus can perform an adjusting operation in accordance with the program shown in general in Figure 3.

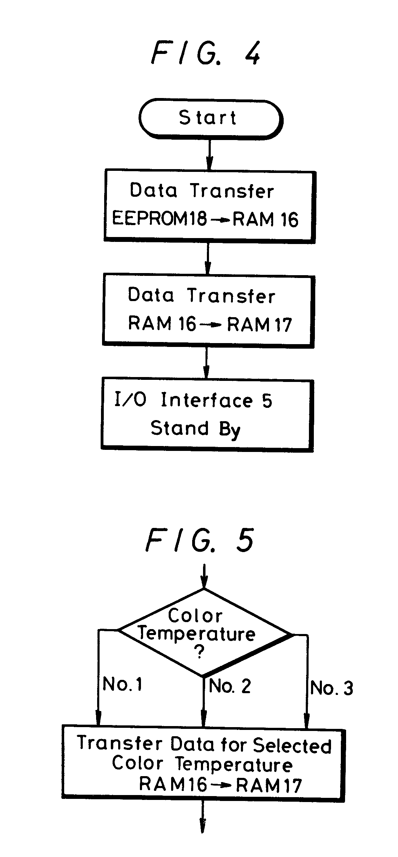

Referring to Figure 3, at the "start" of the adjustment program, the data RAM 17 is initially set as shown in Figure 4. More particularly, the CPU 10 causes the data stored in the EEPROM 18 to be transferred therefrom to the work RAM 16 and then the data from the work RAM 16 are transferred to the data RAM 17. Thereafter, the I/O interface 5 is set and placed in a stand-by mode for receiving an input.

Then, as shown in Figure 3, a desired colour temperature is selected for a particular broadcasting station. In the selection of the colour temperature, as shown in Figure 5, the operator of the broadcasting station selects the serial number of the desired colour temperature data and data corresponding to the selected serial number are transferred from the work RAM 16 to the data RAM 17. Thereafter, the I/O interface 5 is placed on the stand-by mode for receiving an input.

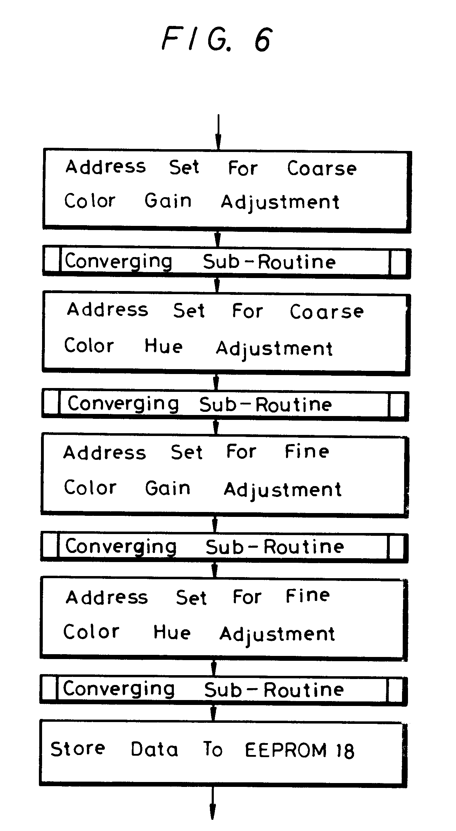

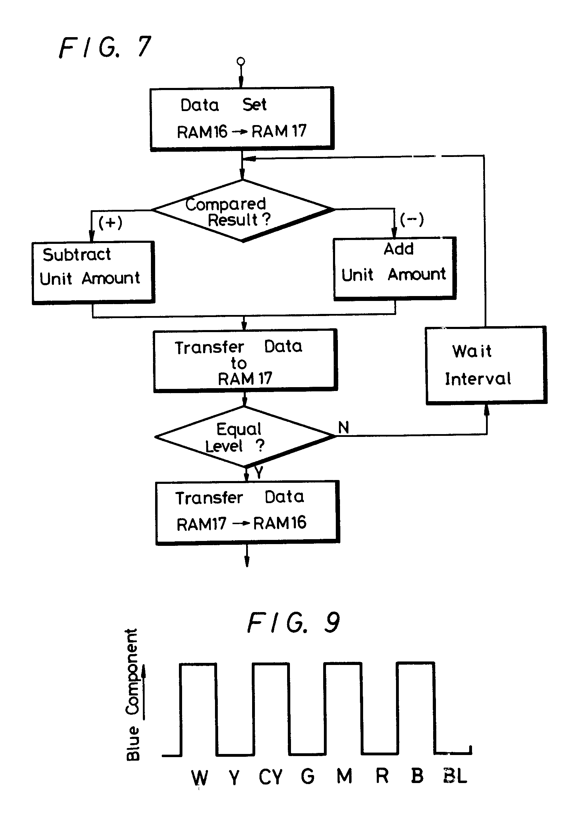

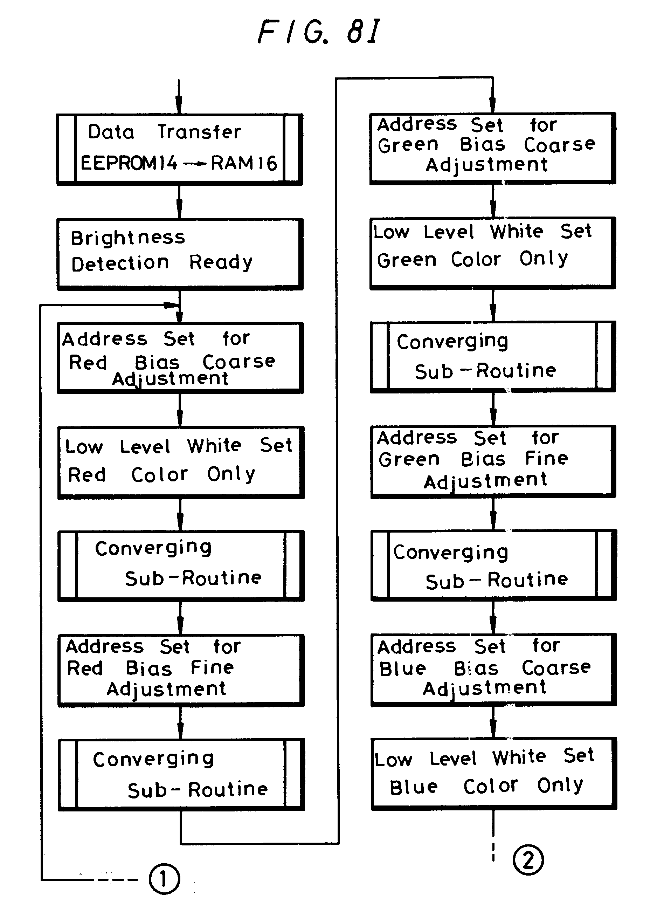

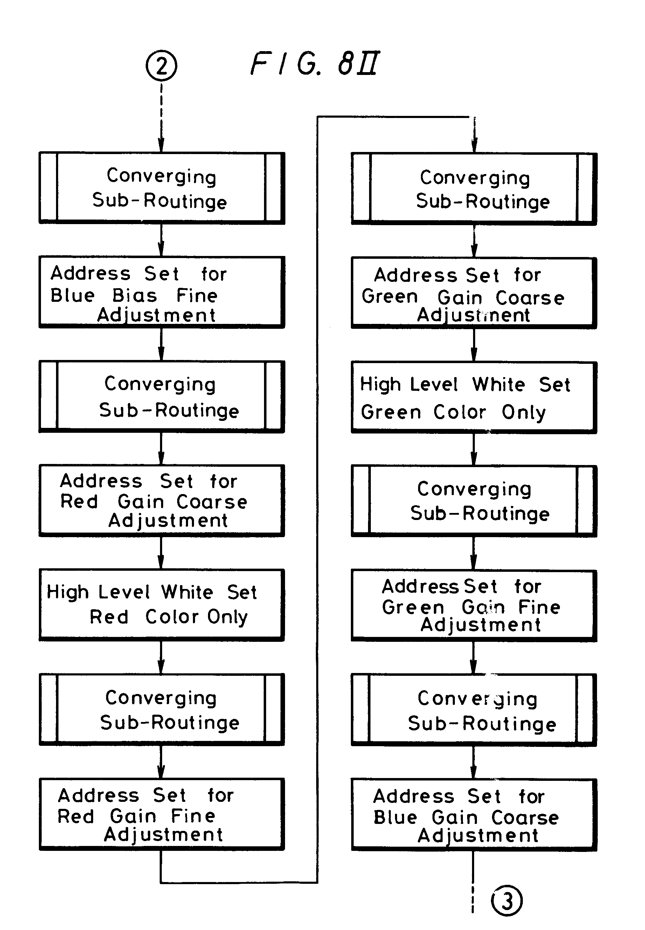

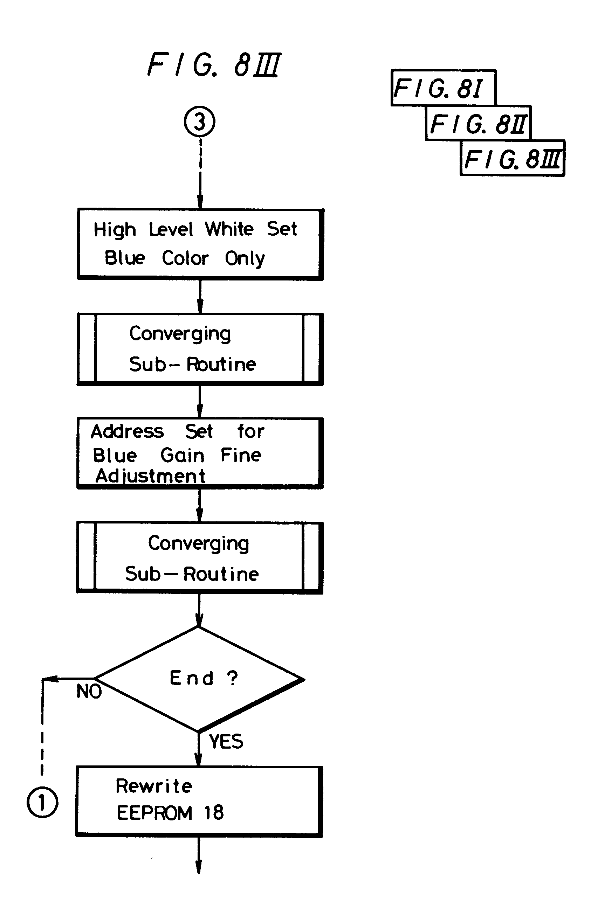

Subsequently, the automatic colour gain and colour hue adjustments, that is, the so-called colour and hue adjustments, will be carried out. In effecting the colour gain and the colour hue adjustments, at first, the movable contact 2a of the switch 2 is engaged with the second fixed contact 2c in response to a control signal from the I/O interface 5, and the colour bar signal is supplied to the colour signal processing circuit 6. Then, the level detecting/comparing circuit 9 is operated by a control signal from the I/O interface 5 such that the level of the blue colour component of the white portion W of the colour bar signal (Figure 9) and the signal level of the blue colour portion B of the colour bar signal are compared with each other. Further, as shown in Figure 6, the addresses of the work RAM 16 and the data RAM 17 for coarse adjustment of the colour gain are respectively specified by the CPU 10 so as to carry out a predetermined operation. Thereafter, according to a converging sub-routine, coarse adjustment of the colour gain is carried out. In such converging sub-routine, as shown in Figure 7, at first, the data are read out of the work RAM 16 thereby to set an initial value of the data RAM 17. It will be appreciated that, if the adjustment data used last time are taken as the initial value, it is possible to reduce the time necessary for adjustment. Further, in the converging sub-routine, the level detecting/comparing circuit 9 judges whether a value resulting from subtracting the signal level of the blue colour portion B from the level of the blue colour component of the white portion W of the colour bar signal of Figure 9 is positive or negative. If such difference value is positive (+), a unit amount is subtracted from the data at that time and the resultant data are transferred to the data RAM 17, whereas, if the subtracted value is negative (-), a unit amount is added to the data at that time and the resultant data are transferred to the data RAM 17. Then, the gain of the colour gain amplifier 22 is adjusted by the data from the data RAM 17. After a predetermined time or "wait interval", the above described operations are repeated in sequence. When the level of the blue colour component of the white portion W and the signal level of the blue colour portion B coincide with each other, the data in the data RAM 17 at that time are transferred to the work RAM 16 and then the coarse adjustment of the colour gain is ended.

Next, the level detecting/comparing circuit 9 is operated by a control signal from the I/O interface 5 such that the level of the blue colour component of the white portion W of the colour bar signal shown in Figure 9 is compared with the level of a blue colour component of a cyan portion CY or a magenta portion M of that colour bar signal. The addresses of the work RAM 16 and the data RAM 17 for carrying out the coarse adjustment of the colour hue are specified, as shown in Figure 6, and a predetermined operation, according to the sub-routine of Figure 7, is performed for adjusting the colour hue of the decoder 23. When the level of the blue colour component of the white portion W coincides with the level of the blue colour component of the cyan portion CY or the magenta portion M, the data from the data RAM 17, at that time, are transferred to the work RAM 16 and thus the coarse adjustment of the colour hue is completed.

The fine adjustment of the colour gain is carried out similarly to the above described coarse adjustment of the colour gain. Moreover, after that, the fine adjustment of the colour hue is carried out similarly to the coarse adjustment of the colour hue. Thereafter, the data stored in the EEPROM 18 are rewritten on the basis of the data from the work RAM 16 and the colour gain adjustment and the colour hue adjustment are completed.

Subsequently, for automatically adjusting the white balance, the movable contact 2a of the switch 2 is engaged with the fixed contact 2w in response to a control signal from the I/O interface 5, whereby a high white signal having the level of 100 IRE, and a low white signal having the level of 20 IRE are alternately supplied from the white signal generating circuit 4 through the colour signal processing circuit 6 to the drive circuit 7. At the commencement of this automatic white balance adjustment, as shown in Figure 8, one of the plurality of reference signal sets stored in the EEPROM 14 is selected and transferred to the work RAM 16. The comparing signal for the comparing circuit 13, is an output signal from the brightness detecting apparatus 12 which detects the brightness of the video display screen 8a of the colour cathode ray tube 8. Next, the addresses of the work RAM 16 and the data RAM 17 for carrying out the coarse adjustment of the red colour bias thereof are specified and, in response thereto, a predetermined operation is executed. Then, the white signal generating circuit 4 is controlled by a control signal from the I/O interface 5 so as to generate a low white signal having the level of, for example, 20 IRE, and also the drive circuit 7 is similarly controlled so as to produce only the red colour signal at its output side with the result that a red colour is displayed on the video display screen 8a of the colour cathode ray tube 8. The reference signal now applied from the EEPROM 14 to the comparing circuit 13 is designated a red colour low reference signal and, in accordance therewith, the red colour bias is roughly adjusted by means of the converging sub-routine shown in Figure 7.

Of course, in this use of the sub-routine of Figure 7, the "compared result" is obtained from the comparing circuit 13 rather than from the level detecting/comparing circuit 9 as in the earlier described use of the sub-routine of Figure 7. Specifically, at first, the data are read out from the work RAM 16 and the initial value of the data RAM 17 is set. Once again, if the adjusting data used last time are used as the initial value, it is possible to reduce the time necessary for the adjustment. According to this convergence sub-routine, it is determined whether the value resulting from subtracting the level of the output signal of the brightness detecting apparatus 12 from the level of the reference signal (this time, the red colour reference signal) in the comparing circuit 13 is positive or negative: If it is positive, a unit amount is subtracted from the data at that time and the resultant data are transferred to the data RAM 17. If on the other hand, the resultant value is negative, a unit amount is added to the data at that time prior to them being transferred to the data RAM 17. Then, the data from the data RAM 17 are employed for adjusting via the D/A converting circuit 11, the red colour of the drive circuit 7, and this sequence of operations is repeatedly executed until the level of the red colour low reference signal and the level of the output signal from the brightness detecting apparatus 12 become coincident with each other. Upon such coincidence, the data of the data RAM 17 at that time are transferred to the work RAM 16, and at that time, the coarse adjustment of the red colour bias is completed.

Next, as shown in Figure 8, the addresses of the work RAM 16 and the data RAM 17 for carrying out the fine adjustment of the red colour bias are specified by the CPU 10 and the fine adjustment of the red colour bias is carried out in a way similar to that described above, that is, by the converging sub-routine of Figure 7.

Then, as further shown in Figure 8, the addresses of the work RAM 16 and the data RAM 17 for carrying out the coarse adjustments of the green colour bias are specified and a corresponding operation is carried out. Also, a control signal from the I/O interface 5 controls the white signal generating circuit 4 so as to generate the low white signal of, for example, 20 IRE, and the drive circuit 7 is controlled to generate at its output side only the green colour signal. Hence, the green colour is displayed on the display screen 8a of the colour cathode ray tube 8. Then, the reference signal for the comparing circuit 13 is specified as a green colour low reference signal from the EEPROM 14 and thereafter, the coarse adjustment of the green colour bias is carried out according to the converging sub-routine shown in Figure 7. The data are read out from the work RAM 16 and the initial value in the data RAM 17 is set. Once again, if the adjusting data used last time are used as the initial value, it is possible to reduce the time necessary for the adjustment.

By means of the converging sub-routine of Figure 7, it is judged whether a value resulting from subtracting the level of the output signal of the brightness detecting apparatus 12 from the level of the reference signal (this time, the green colour low reference signal) in the comparing circuit 13 is positive or negative. If it is positive, a unit amount is subtracted from the data at that time and the resultant data are transferred to the data RAM 17. If on the other hand, the subtracted value is negative, a unit amount is added to the data which are then transferred to the data RAM 17. Then, the bias of the green colour in the drive circuit 7 is adjusted in response to the data from the data RAM 17 via the D/A converting circuit 11 and this sequence of operations is repeatedly executed. When the level of the green colour low reference signal and the level of the output signal from the brightness detecting apparatus 12 become coincident with each other, the data of the data RAM 17 at that time are transferred to the work RAM 16 and the coarse adjustment of the green colour bias is completed.

Subsequently, as shown in Figure 8, the addresses of the work RAM 16 and the data RAM 17 for carrying out the fine adjustments of the green colour bias are specified and the fine adjustment of the green colour bias is carried out similarly to the above described fine adjustment of the red colour bias.

Then, as shown in Figure 8, the addresses of the work RAM 16 and the data RAM 17 for carrying out the coarse adjustment of the blue colour bias are specified. Moreover, by a control signal from the I/O interface 5, the white signal generating circuit 4 is controlled so as to generate the low white signal of, for example, 20 IRE and also the drive circuit 7 is controlled to generate, at its output side, only a blue colour signal so that the blue colour is displayed on the display screen 8a of the cathode ray tube 8. Further, at this time, the reference signal for the comparing circuit 13 is specified as the blue colour low reference signal and the coarse adjustment of the blue colour bias is carried out according to the converging sub-routine shown in Figure 7. Specifically, data are read out from the work RAM 16 and the initial value is set in the data RAM 17. Once more, if the adjusting data used last time are used as the initial value, it is possible to reduce the time necessary for the adjustment. According to this converging subroutine, it is judged whether a value resulting from subtracting the level of the output signal of the brightness detecting apparatus 12 from a level of a reference signal (this time, the blue colour low reference signal) in the comparing circuit 13 is positive or negative. If it is positive, a unit amount is subtracted from the data at that time, and the resultant data are transferred to the data RAM 17. On the other hand, if the resultant value in the comparing circuit 13 is negative, a unit amount is added to the data and the resultant data are transferred to the data RAM 17. Then, the bias of the blue colour in the drive circuit 7 is adjusted in response to the data from the data RAM 17 via the D/A converting circuit 11 and this sequence of operations is repeatedly executed. When the level of the blue colour low reference signal and the level of the output signal from the brightness detecting apparatus 12 become coincident, the data in the data RAM 17 at that time are transferred to the work RAM 16 and the coarse adjustment of the blue colour bias is completed.

Continuing with the program shown in Figure 8, the respective addresses of the work RAM 16 and the data RAM 17 for carrying out the fine adjustments of the blue colour bias are specified and the fine adjustment of the blue colour bias is carried out in a similar way to the above-described fine adjustment of the red colour bias.

Then, as shown in Figure 8, the respective addresses of the work RAM 16 and the data RAM 17 for performing coarse adjustments of the red gain are specified, thereby to carry out a predetermined operation. Also, by a control signal from the I/O interface 5, the white signal generating circuit 4 is controlled so as to generate the high white signal having the level of, for example, 100 IRE, and also the drive circuit 7 is controlled to generate at its output side only the red colour signal. Thus, a red colour is displayed on the display screen 8a of the colour cathode ray tube 8. Moreover, the reference signal of the comparing circuit 13 is now specified as the red colour high reference signal, and the coarse adjustment of the red colour gain is carried out in accordance with the converging sub-routine shown in Figure 7. In other words, data are read out from the work RAM 16 and the initial value is set in the data RAM 17. If the adjusting data used last time are used as the initial value in the data RAM 17, it is possible to reduce the time necessary for the adjustment thereof, In this converging sub-routine, it is judged whether a value resulting from subtracting the level of the output signal of the brightness detecting apparatus 12, when exposed to the red colour displayed on the display screen 8a, from the level of the red colour high reference signal in the comparing circuit 13 is positive or negative. If it is possible, a unit amount is subtracted from the data at that time, and the subtracted data are transferred to the data RAM 17. If on the other hand, the result of the subtraction in the comparing circuit 13 is negative, a unit amount is added to the data then in the work RAM 16 and the resultant data are transferred to the data RAM 17.

Then, the gain of the red colour channel in the drive circuit 7 is adjusted in response to the data from the data RAM 17 via the D/A converting circuit 11, and this sequence of operations is repeatedly carried out. When the level of the red colour high reference signal and the level of the output signal from the brightness detecting apparatus 12 become coincident with each other, the data in the data RAM 17 at that time are transferred to the work RAM 16 and then the coarse adjustment of this red colour gain is completed. Subsequently, as shown in Figure 8, the addresses of the work RAM 16 and the data RAM 17 for carrying out the fine adjustment of the red colour gain are specified, and the fine adjustment of the red colour gain is executed similarly to the manner described above.

Then, as shown in Figure 8, the addresses of the work RAM 16 and the data RAM 17 for carrying out coarse adjustment of the green colour gain are specified, whereby a predetermined operation is carried out. Also, by a control signal from the I/O interface 5, the white signal generating circuit 4 is controlled so as to generate the high white signal having the level of, for example, 100 IRE, and the drive circuit 7 is also controlled to generate at its output side only the green colour signal, so that the green colour is displayed on the display screen 8a of the colour cathode ray tube 8. The reference signal of the comparing circuit 13 is at this time specified as the green colour high reference signal, and thereafter the coarse adjustment of the green colour gain is carried out according to the converging subroutine shown in Figure 7. In other words, data are read out from the work RAM 16 and the initial value is set in the data RAM 17. Here again, if the adjusting data used last time are used as the initial value, it is possible to reduce the time necessary for the adjustment. In this converging subroutine, it is judged whether a value resulting from subtracting the level of the output signal of the brightness detecting apparatus 12 in response to the green colour displayed on the display screen 8a from the level of the green colour high reference signal in the comparing circuit 13 is positive or negative. If such resulting value is positive, a unit amount is subtracted from the data at that time and the resulting data are transferred to the data RAM 17. If on the other hand, the value resulting from the subtraction in the comparing circuit 13 is negative, a unit amount is added to the data, and the resultant data are transferred to the data RAM 17. Then, the gain of the green colour in the drive circuit 7 is adjusted in response to the data in the data RAM 17 via the D/A converting circuit 11 and this sequence of operation, is repeatedly executed. When the level of the green colour high reference signal, and the level of the output signal from the brightness detecting apparatus 12 become coincident with each other, the data in the data RAM 17 at that time are transferred to the work RAM 16 and the coarse adjustment of the green colour gain is completed.

Subsequently, as shown in Figure 8, the addresses of the work RAM 16 and the data RAM 17 are specified for carrying out the fine adjustment of the green colour gain is effected in a manner similar to that described above for the fine adjustment of the red colour gain.

Next, as shown in Figure 8, the addresses of the work RAM 16 and the data RAM 17 for carrying out the coarse adjustment of the blue colour gain are specified, whereby a predetermined operation is carried out. Further, by a control signal from the I/O interface 5, the white signal generating circuit 4 is controlled so as to generate the high white signal having the level of, for example, 100 IRE, and also the drive circuit 7 is controlled to generate at its output side only the blue colour signal, so that the blue colour is displayed on the video display screen 8a. At this time, the reference signal in the comparing circuit 13 is specified as the blue colour high reference signal and, thereafter, the coarse adjustment of the blue colour gain is carried out according to the converging sub-routine shown in Figure 7. More specifically, data are read out from the work RAM 16 and the initial value is set in the data RAM 17. In this case, if the adjusting data used last time are used as the initial value, it is possible to reduce the time necessary for the adjustment. In this converging sub-routine, it is judged whether a value resulting from subtracting the level of the output signal of the brightness detecting apparatus 12 corresponding to the blue colour displayed on the display screen 8a from the level of the blue colour high reference signal is positive or negative. If it is positive, a unit amount is subtracted from the data at that time and the resultant data are transferred to the data RAM 17. If, on the other hand, the subtracted value is negative, a unit amount is added to the data at that time and the resultant data are transferred to the data RAM 17. Then, by using the data in the data RAM 17, the gain of the blue colour in the drive circuit 7 is adjusted via the D/A converting circuit 11 and this sequence of operations is repeatedly executed. when the level of the blue colour high reference signal and the level of the output signal from the brightness detecting apparatus 12 become coincident with each other, the data in the data RAM 17 at that time are transferred to the work RAM 16 and the coarse adjustment of this blue colour gain is completed.

Subsequently, as shown in Figure 8, the addresses of the work RAM 16 and the data RAM 17 for carrying out the fine adjustment of the blue colour gain are specified. Then, the fine adjustment of the blue colour gain is carried out in a manner similar to that described above for the fine adjustment of the red colour gain. When all adjustments of the red, green and blue colours have been completed, the data stored in the EEPROM 18 are rewritten in accordance with the data stored in the work RAM 16.

Thereafter, if the colour gain, the colour hue and the white balance of a monitor television apparatus are controlled on the basis of the data stored in the EEPROM 18, it is possible to provide the monitor television apparatus with colour gain, colour hue and white balance which are adjusted with good accuracy. Moreover, since the adjustment is carried out automatically, such adjustment can be advantageously made with high accuracy and in a quite short time by even a relatively unskilled operator. Furthermore, since the red colour, the green colour and the blue colour are each displayed sequentially on the phosphor screen 8a of the colour cathode ray tube 8, and the brightness of each colour is detected while it alone is displayed, the brightness detecting apparatus 12 and other parts of the apparatus can be relatively simplified as compared with corresponding parts in an apparatus of the type in which a white colour is analyzed into red, green and blue colours by a filter. Also, since it is not necessary to consider the filter characteristic, the light-emission and spectrograph characteristics of the phosphor of the cathode ray tub, it is possible to carry out the adjustment more easily and with higher accuracy.

When such an embodiment of television monitor control apparatus is required to match the white balance of another television monitor as a standard, six kinds of data representing picture screens displaying red, green and blue colours of the high white signal are sequentially detected by the brightness detecting apparatus 12 from the other television monitor. These data are stored in the EEPROM 14 and, then, such data stored in the EEPROM 14 are used as the reference signals to carry out the above mentioned adjustments. Thereby, it is possible to adjust one television monitor, to correspond with the previously effected adjustment of another television monitor.

## Claims

1. Television monitor control apparatus comprising:
colour bar generating means (3) for generating a predetermined colour bar signal of a standard television signal format;
signal processing means (6) supplied with said colour bar signal from said colour bar generating means (3);
a colour cathode ray tube (8) supplied with a processed colour signal obtained from said signal processing means (6); and
signal control means (5,9,11,16,17,18) for adjusting the operation of said signal processing means (6);
characterized in that:
said signal control means (5,9,11,16,17,18) includes level detecting and comparing means (9), means operating said level detecting and comparing means (9) to compare the level of a blue colour portion of said colour bar signal as processed by said signal processing means (6) with the level of the blue component of a white portion of the processed colour bar signal, means for adjusting the gain of said signal processing means (6) in response to an output of said level detecting and comparing means (9) so as to achieve coincidence of the levels of the compared blue portion and blue component of the white portion of said processed colour bar signal, means cooperating with said level detecting and comparing means (9) to compare the level of said blue component of the white portion of the processed colour bar signal with the level of the blue component of a cyan or magenta portion of the processed colour bar signal, and means for adjusting said signal processing means (6) in response to an output of said level detecting and comparing means (9) so as to achieve coincidence of the levels of the compared blue components of the white portion and the cyan or magenta portion of the processed colour bar signal.

2. Television monitor control apparatus according to claim 1 wherein said signal processing means (6) includes a colour gain control amplifier (22), a colour hue control circuit (23), and drive bias and drive gain control circuits (7).

3. Television monitor control apparatus according to claim 1 comprising:
white signal generator means (4);
a drive circuit (7) connected to said colour cathode ray tube (8);
reference signal memory means (14) for storing at least one set of reference signals;
signal control means (13) for adjusting the operation of said drive circuit (7); and
brightness detecting means (12) for detecting a brightness of said colour cathode ray tube (8);
said colour cathode ray tube (8) being selectively supplied with a colour signal via said drive circuit (7);
said white signal generator means (4) generating high level white and low level white signals each including three primary colour signals for selective supply via said drive circuit (7) to said colour cathode ray tube (8); and
said signal control means (13) controlling said drive circuit (7) on the basis of a comparison of a signal from said reference signal memory means (14) with a signal corresponding to the detected brightness of said colour cathode ray tube (8).

4. Television monitor control apparatus according to claim 3 wherein said reference signal memory means (14) stores high and low level sets of red, green and blue colour reference signals, said drive circuit (7) is operative, during said adjusting of its white balance, individually to apply processed red, green and blue colour signals in sequence to said colour cathode ray tube (8) so that said brightness detecting means (12) detects only red, green and blue colours, respectively, displayed, in sequence, by said colour cathode ray tube (8), and said red, green and blue colour reference signals of the high and low level sets are selected for comparison with a detected output of said brightness detecting means (12) when said drive circuit (6) applies processed red, green and blue colour signals in response to said high level and low level white signals, respectively.

## Patentansprüche

1. Fernsehmonitorsteuereinrichtung mit:
einer Einrichtung (3) zur Erzeugung eines Farbbalkens zur Erzeugung eines vorbestimmten Farbbalkensignals eines Standardfernsehsignalformats;
einer Signalverarbeitungseinrichtung (6), die mit dem Farbbalkensignal von der Einrichtung (3) zur Erzeugung des Farbbalkens versorgt wird;
einer Farbkathodenstrahlröhre (8), die mit dem verarbeiteten Farbsignal versorgt wird, das von der Signalverarbeitungseinrichtung (6) erhalten wird; und
Signalsteuermittel (5,9,11,16,17,18) zur Einstellung der Arbeitsweise der Signalverarbeitungseinrichtung (6);
**dadurch gekennzeichnet,** daß
die Signalsteuermittel (5,9,11,16,17,18) Mittel (9) zum Ermitteln und Vergleichen des Pegels enthalten, Mittel, die die Mittel (9) zum Ermitteln und Vergleichen des Pegels betätigen, um den Pegel des blauen Farbanteils des Farbsignalbalkens, wie er durch die Signalverarbeitungseinrichtung (6) verarbeitet wurde, mit dem Pegel der blauen Farbkomponente des weißen Anteils des verarbeiteten Farbbalkensignals zu vergleichen, Mittel zur Einstellung des Verstärkung der Signalverarbeitungseinrichtung (6) als Antwort auf ein Ausgangssignal der den Pegel ermittelnden und vergleichenden Mittel (9), um so eine Übereinstimmung des Pegels des verglichenen blauen Anteils und der blauen Komponente des weißen Anteils des verarbeiteten Farbbalkensignals zu erhalten, Mittel, die mit den den Pegel ermittelnden und vergleichenden Mitteln (9) Zusammenarbeiten, um den Pegel der blauen Komponente des weißen Anteils des verarbeiteten Farbbalkensignals mit dem Pegel der blauen Komponenten eines Zyan- oder Magenta-Anteils des verarbeiteten Farbbalkensignals zu vergleichen, und Mittel zur Einstellung der Signalverarbeitungseinrichtung (6) als Antwort auf ein Ausgangssignal der den Pegel ermittelnden und vergleichenden Mittel (9), um so eine Übereinstimmung der Pegel der verglichenen blauen Komponenten des weißen Anteils und des Zyan- oder Magenta-Anteils des verarbeiteten Farbbalkensignals zu erhalten.

2. Fernsehmonitorsteuereinrichtung nach Anspruch 1, wobei die Signalverarbeitungseinrichtung (6) einen Steuerverstärker (22) für die Farbverstärkung, eine Steuerschaltung (23) für den Farbton und eine Steuerschaltung (7) für die Treibervorspannung und die Treiberverstärkung aufweist.

3. Fernsehmonitorsteuereinrichtung nach Anspruch 1, mit:
einer Erzeugungseinrichtung (4) für das weiße Signal;
einer Treiberschaltung (7), die mit der Farbkathodenstrahlröhre (8) verbunden ist;
einer Speichereinrichtung (14) für das Referenzsignal, um wenigstens einen Satz von Referenzsignalen zu speichern;
einer Steuereinrichtung (13) zur Einstellung des Betriebs der Treiberschaltung (7); und
einer Einrichtung (12) zur Ermittlung der Helligkeit, um die Helligkeit der Farbkathodenstrahlröhre (8) zu ermitteln;
wobei die Farbkathodenstrahlröhre (8) wahlweise mit einem Farbsignal über die Treiberschaltung (7) versorgt wird;
wobei die Erzeugungseinrichtung (4) für das weiße Signal ein weißes Signal mit einem hohen und niedrigen Pegel erzeugt, das jeweils drei Primärfarbsignale enthält, um die Kathodenstrahlröhre (8) damit wahlweise über die Treiberschaltung (7) zu versorgen; und
wobei die Signalsteuereinrichtung (13) die Treiberschaltung (7) auf der Basis eines Vergleichs eines Signals von der Speichereinrichtung (14) für das Referenzsignal mit einem Signal steuert, das der ermittelten Helligkeit der Farbkathodenstrahlröhre (8) entspricht.

4. Fernsehmonitorsteuereinrichtung nach Anspruch 3, wobei die Speichereinrichtung (14) für das Referenzsignal hohe und niedrige Pegelsätze der roten, grünen und blauen Farbreferenzsignale speichert und wobei die Treiberschaltung (7) während der Einstellung des Weißausgleichs betätigt wird, um ein individuell verarbeitetes rotes, grünes und blaues Farbsignal der Reihe nach zur Farbkathodenstrahlröhre (8) zu liefern, so daß die Einrichtung (12) zur Ermittlung der Helligkeit jeweils nur eine rote, grüne und blaue Farbe ermittelt und der Reihe nach durch die Farbkathodenstrahlröhre (8) anzeigt, und wobei rote, grüne und blaue Farbreferenzsignale mit den hohen und niedrigen Pegeln ausgewählt werden, um mit einem ermittelten Ausgangssignal der Einrichtung (12) zur Ermittlung der Helligkeit verglichen zu werden, wenn die Treiberschaltung (6) das verarbeitete rote, grüne und blaue Farbsignal jeweils in Antwort auf die weißen Signale mit hohem und niedrigem Pegel verwendet.

## Revendications

1. Appareil de commande d'écran de contrôle de télévision, comprenant :
un moyen (3) de production de barres de couleur servant à produire un signal prédéterminé de mire de barres de couleur d'un format normalisé de signal de télévision;
un moyen (6) de traitement de signal recevant ledit signal de mire de barres de couleur de la part dudit moyen (3) de production de barres de couleur;
un tube cathodique couleur (8) recevant le signal couleur traité obtenu de la part dudit moyen (6) de traitement de signal ; et
un moyen (5, 9, 11, 16, 17, 18) de commande de signal servant à ajuster le fonctionnement dudit moyen (6) de traitement de signal;
caractérisé en ce que :
ledit moyen (5, 9, 11, 16, 17, 18) de commande de signal comporte un moyen (9) de détection et de comparaison de niveaux, un moyen qui amène ledit moyen (9) de détection et de comparaison de niveaux à comparer le niveau d'une partie de couleur bleue dudit signal de mire de barres de couleur, tel que traité par ledit moyen (6) de traitement de signal, avec le niveau de la composante bleue d'une partie blanche du signal de mire de barres de couleur traité, un moyen servant à régler le gain dudit moyen (6) de traitement de signal en fonction du signal de sortie dudit moyen de détection et de comparaison de niveaux, (9) de façon à réaliser la coïncidence entre les niveaux comparés de la partie bleue et de la composante bleue de la partie blanche dudit signal de mire de barres de couleur traité, un moyen qui coopère avec ledit moyen de détection et de comparaison de niveaux (9) de façon à comparer le niveau de ladite composante bleue de la partie blanche du signal de mire de barres de couleur traité avec le niveau de la composante bleue d'une partie cyan ou magenta du signal de mire de barres de couleur traité, et un moyen servant à régler ledit moyen (6) de traitement de signal en fonction du signal de sortie dudit moyen de détection et de comparaison de niveaux (9) de façon à réaliser la coïncidence entre les niveaux comparés des composantes bleues de la partie blanche et de la partie cyan ou magenta du signal de mire de barres de couleur traité.

2. Appareil de commande d'écran de contrôle de télévision selon la revendication 1, où ledit moyen (6) de traitement de signal comporte un amplificateur (22) de commande de gain de couleur, un circuit (23) de commande de teinte, et des circuits (7) de commande de polarisation d'attaque et de gain d'attaque.

3. Appareil de commande d'écran de contrôle de télévision selon la revendication 1, comprenant :
un moyen (4) de production de signal de blanc;
un circuit d'attaque (7) connecté audit tube cathodique couleur (8);
un moyen (14) faisant fonction de mémoire de signal de référence, qui sert à mémoriser au moins un groupe de signaux de référence;
un moyen (13) de commande de signal servant à ajuster le fonctionnement dudit circuit d'attaque (7); et
un moyen (12) de détection de luminosité, qui sert à mesurer la luminosité dudit tube cathodique couleur (8);
ledit tube cathodique couleur (8) recevant sélectivement un signal couleur via ledit circuit d'attaque (7);
ledit moyen (4) de production de signal de blanc produisant des signaux de blanc de niveau haut et de blanc de niveau bas qui comportent chacun trois signaux de couleur primaire destinés à être sélectivement envoyés via ledit circuit d'attaque (7) audit tube cathodique couleur (8); et
ledit moyen (13) de commande de signal commandant ledit circuit d'attaque (7) sur la base de la comparaison d'un signal venant dudit moyen mémoire de signal de référence (14) avec un signal correspondant à la luminosité mesurée dudit tube cathodique couleur (8).

4. Appareil de commande d'écran de contrôle de télévision selon la revendication 3, où ledit moyen mémoire de signal de référence (14) emmagasine des groupes de niveau haut et de niveau bas de signaux de références de couleurs rouge, verte et bleue, ledit circuit d'attaque (7) a pour fonction, pendant le réglage de son équilibre de blanc, d'appliquer un à un les signaux de couleurs rouge, verte et bleue traités en séquence audit tube cathodique couleur (8) de façon que ledit moyen (12) de détection de luminosité mesure respectivement la seule couleur rouge, verte ou bleue, lesquelles sont affichées séquentiellement par ledit tube cathodique couleur (8), et lesdits signaux de référence de couleurs rouge, verte et bleue des groupes de niveau haut et de niveau bas sont sélectionnés pour être comparés avec le signal de sortie de mesure dudit moyen de détection et de luminosité (12) lorque ledit circuit d'attaque (7) applique respectivement les signaux de couleurs rouge, verte et bleue traités en réponse auxdits signaux de blanc de niveau haut et de niveau bas.
